# EUROPEAN PATENT APPLICATION

(11) **EP 2 746 187 A1**
(43) Date of publication of application: **25.06.2014**
(21) Application number: 13186314.4
(22) Date of filing: 27.09.2013
(51) Int. Cl.: B65D 77/20

(54) **Container and closure assembly**

(30) Priority: 19.12.2012 US 201213661240
(71) Applicant: Sonoco Development, Inc., Hartsville, SC 29550 (US)
(72) Inventor: Huffer, Scott William, Hartsville, SC South Carolina 29550 (US)
(74) Representative: Earnshaw, Geoffrey Mark

(57) **Abstract**

A container and closure assembly (10) is provided. A projecting rim (18) surrounds an opening into the container (12) and includes a rim sealing surface (32). The closure (14) is provided for covering the container opening. The closure is formed from a support ring (20) dimensioned to surround the rim of the container and a sealing membrane (22). The ring includes a ring sealing surface (40) positioned concentric with the rim sealing surface. The membrane is sealed to the rim sealing surface and further sealed to the ring sealing surface. The seal (48) of the membrane to the rim sealing surface is separable upon removal of the ring from its position surrounding the rim of the container, while the seal (50) of the membrane to the ring remains in place upon ring removal.

## Description

### Field of the Invention

The present disclosure relates to container and closure assembly. Preferably, the closure forms a hermetic seal with the container, with the seal being removable and the closure being replaceable on the container.

### Background

Closures in the form of a lid or overcap for a container are provided in a number of forms. An example of a container with a flat sealing rim and a plastic overcap is shown in US 7,165,306. Means for hermetically sealing a container in conjunction with the reclosable lid or overcap are also known. One example of a hermetic seal for a container is the provision of a flexible membrane sealed to the rim of the container, with the membrane being removable to provide access to the contents of the container.

US 4,171,084 to Smith shows a closure for a container having an outer ring with a central opening that is closed by a laminate sheet. The ring includes an upper circular portion and vertically positioned skirt portion. The two portions surround the top and outside edge of the rim of the container. The laminate sheet is secured between the bottom surface of the upper ring portion and the upper edge of the container rim. The laminate is sealed to both the ring and container rim by induction heating. Opening the container by removal of the ring causes a separation of the laminate from the rim of the container.

US 4,359,169 to Helms et al shows a closure for a container having a membrane sealed between the underside surface of the outer peripheral edge of the closure and the top surface of the rim of the container. The closure includes a pivotable inner member surrounded by an outer ring member. The pivotable member includes a rim having a downwardly projecting flange that is sealed to the membrane. As the pivotable member is lifted, the membrane tears adjacent the flange and a central portion of the membrane is carried by the member.

US 3,892,351 and US 3,973,719 to Johnson et al show a container with a membrane seal attached to the upper surface of the container rim. An overcap is provided on an underside surface with a pattern of heat deformable ribs that engage the edge of the membrane in the area of the container rim. An RF source is used to heat a conductive portion of the membrane to create a seal with the rim while simultaneously heating the ribs. The heated ribs conform to the surface of the membrane.

US 4,448,345 to Helms shows a composite lid structure for a container. A molded upper ring member is combined with a flexible laminate panel positioned on the underside of the ring member that closes the center area of the ring. An adhesive is provided under the panel and below the ring to temporarily secure the panel during assembly. An RF source is used to heat metal particles in the panel to form a seal with the rim of the container. The lid (ring and panel combination) may be removed from the container, leaving the membrane sealed to the rim.

### Summary of the Invention

A container and closure assembly is provided. The container defines an internal volume by one or more walls and an opening therein for access to the product retained within the container. A projecting rim surrounds the opening and includes a rim sealing surface. The closure is provided for covering the container opening. The closure is formed from a support ring, dimensioned to surround the rim of the container, and a sealing membrane. The ring includes a ring sealing surface positioned concentric with the rim sealing surface when the ring is positioned to surround the container rim. The membrane is sealed to the rim sealing surface and further to the ring sealing surface. The seal of the membrane to the rim sealing surface has a first sealing strength and is separable upon removal of the ring from its position surrounding the rim of the container. The seal of the membrane to the ring has a second sealing strength greater than the first sealing strength, and remains in place upon removal of the ring and membrane from the container.

In a further aspect of the assembly, the concentric positioned ring and rim sealing surfaces are positioned substantially in the same plane. Further, it is preferred that the membrane is heat sealed to the ring sealing surface and the rim sealing surface.

In a still further aspect of the assembly, a lifting tab may be provided, forming a projection on the periphery of the ring. Preferably, the container rim extends outward, transverse to the opening defined in the container.

In a further aspect of the assembly, the ring may comprise a skirt portion extending substantially transverse to the ring sealing surface. A retaining ridge or similar resilient attachment means may be formed on an inwardly facing surface of the skirt portion. The retaining ridge is preferably formed for engaging the rim of the container and retaining the ring and sealed membrane on the rim.

Optionally, the difference in the first sealing strength of the seal of the membrane to the rim and the second sealing strength of the seal of the membrane to the ring results from different heat, pressure or timing in a heat sealing process, different adhesives, different materials or a combination of any one of the above.

The container is preferably formed from a thermoplastic material, as is the ring structure. The container and ring are preferably injection molded. The container and ring may be separately formed or may be integrally molded, with a frangible connection there between.

A method of sealing a closure to a container is also provided by the present disclosure. The method of sealing the container is defined by providing a container having an interval volume, an opening therein for access to the internal volume, a projecting rim surrounding the opening, and the rim having a sealing surface. A support ring is further provided that is dimensioned to surround the rim of the container, and is preferably concentric with the rim. The ring is provided with a ring sealing surface. The ring sealing surface is positioned to surround the rim sealing surface, with the ring sealing surface preferably positioned in substantially the same plane as the rim sealing surface when the ring surrounds the rim. A membrane is provided having a surface area corresponding to the area defined by the support ring. The membrane is positioned to contact the rim sealing surface and the ring sealing surface and then sealed there to. The sealing the membrane to the rim sealing surface and the ring sealing surface forms the closure and seals the closure to the container. The seal of the membrane to the rim sealing surface has a first sealing strength and is separable upon removal of the ring from its position surrounding the rim of the container. The seal of the membrane to the ring has a second sealing strength greater than the first sealing strength, and remains in place upon removal of the ring and membrane from the container

Optionally, the variation in the first sealing strength of the seal of the membrane to the rim and the second sealing strength of the seal of the membrane to the ring results from variation in the heat, pressure or timing in a heat sealing process, variation in adhesives, variation in materials or a combination of any one of the above.

The method of the present invention could further comprise the step of providing a lifting tab projecting from the periphery of the ring.

The method of the present invention could further comprise the container rim extending radially outwardly from the container opening.

The method of the present invention could further comprise the support ring comprising a skirt portion, the skirt portion extending substantially transverse to the ring sealing surface.

The method of the present invention could further comprise the support ring comprising a retaining ridge formed on an inwardly facing surface of the skirt portion, and the step of engaging the ridge with the rim of the container for resiliently retaining the ring on the rim.

The method of the present invention could further comprise the container being formed from a thermoplastic material.

The method of the present invention could further comprise the container being injection molded.

The method of the present invention could further comprise the support ring being molded from a thermoplastic material.

The method of the present invention could further comprise the support ring and container rim being separately formed.

The method of the present invention could further comprise the ring and container rim being integrally molded and frangibly connected to one another.

### Brief Description of the Drawings

For the purpose of illustrating the invention, there is shown in the drawings one or more forms that are presently preferred; it being understood that the invention is not limited to the precise arrangements and instrumentalities shown.

Fig. 1 is a perspective view of a container and closure assembly, in a form described by the present disclosure.

Fig. 2 is a top view of the closure as shown in Fig. 1, with container portions shown in phantom.

Fig. 3 is an exploded perspective view of the constituent parts of the container and closure assembly.

Fig. 4 is an enlarged, partial cross sectional view of constituent parts of the container and closure assembly prior to sealing of the closure.

Fig. 5 is an enlarged, partial cross sectional view of constituent parts of the container and closure assembly after sealing of the closure.

Fig. 6 is an enlarged, partial cross sectional view of constituent parts of the container and closure assembly prior after removal of the seal between the closure and the container.

Fig. 7 is an enlarged, partial cross sectional view of constituent parts of the container and closure assembly after reclosing the container.

### Detailed Description

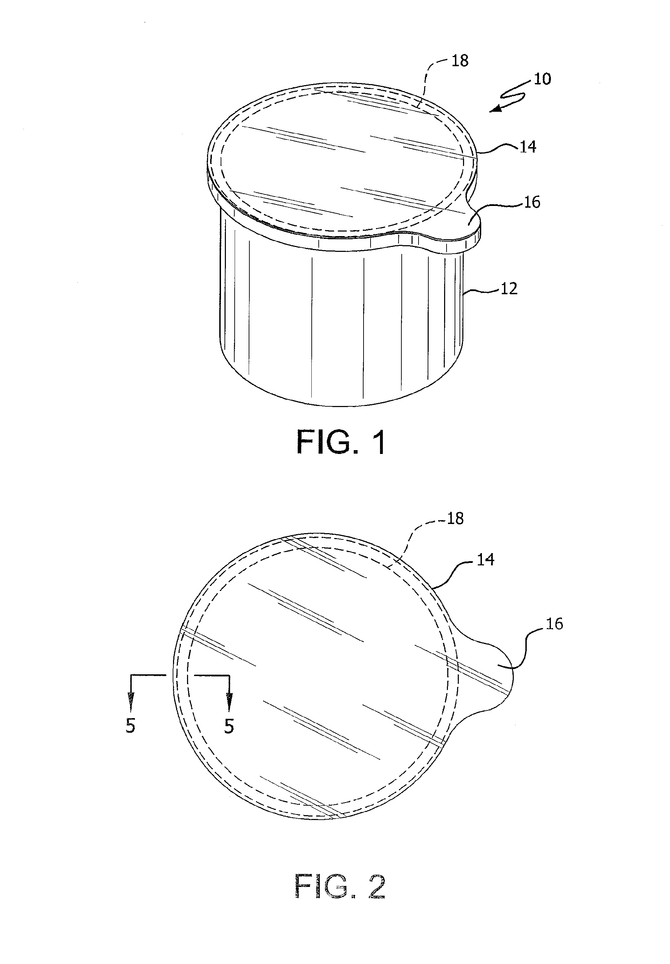

Referring now to the drawings, where like numerals identify like elements, there is shown in Fig. 1 an assembly forming a sealed package, which is generally referred to by the numeral 10. In Fig. 1, the assembly 10 is composed of a container 12 and a closure 14, which may also be referred to as -- among other things -- an overcap or lid. The closure 14 is positioned on the top end of the container 12 and is secured to a rim 18 surrounding the opening into the container 12. An opening tab 16 projects from the peripheral edge of the closure 14 for ease of removing the closure 14 from the container 12. In Fig. 2, it can be seen that the closure 14 surrounds the container rim 18 (shown in phantom).

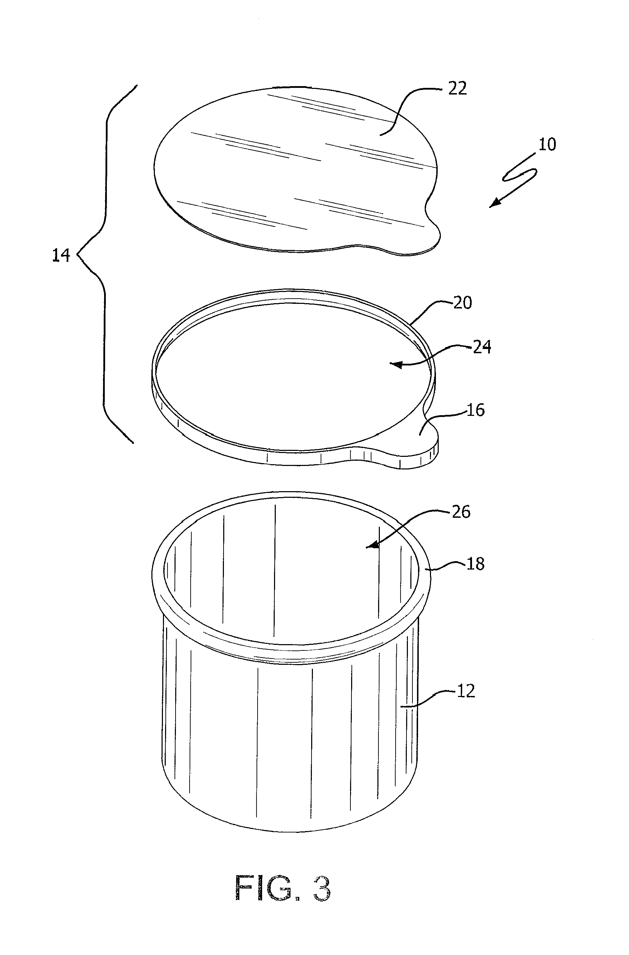

In Fig. 3, the constituent parts of the assembly 10 are shown. The closure 14 is formed by a ring structure 20 and membrane seal 22. The ring 20 is preferably dimensioned such that a central opening 24 in the ring 20 has an inside dimension generally the same as the outside dimension of rim 18 of the container 12. The membrane 22 is dimensioned to extend across the area of the central opening 24 and to also overlap with the upper surface of the ring 20. Hence, the membrane 22 also covers the container opening 26 and rim 18 (as shown in Figs. 1 and 2).

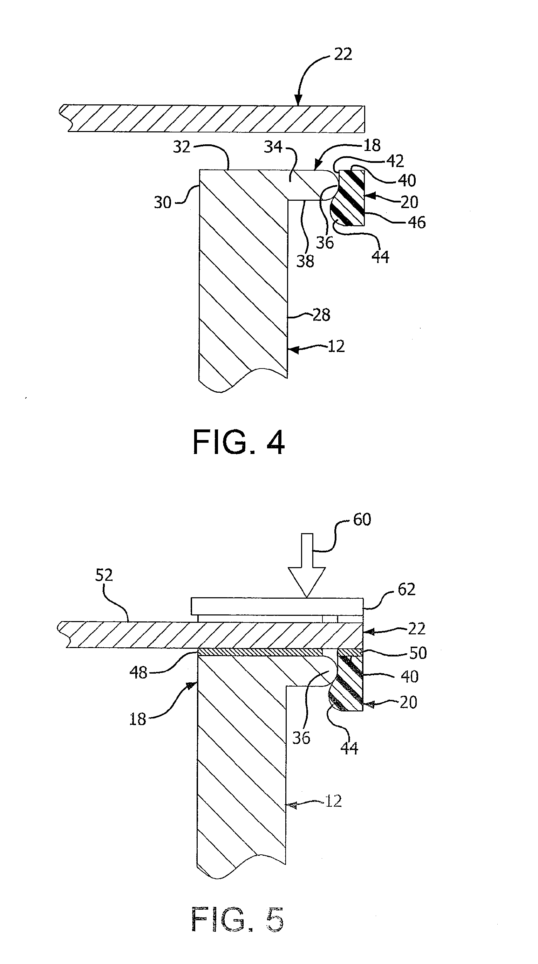

In the partial cross section of Fig. 4 there is shown a portion of the container rim 18 and the ring 20, prior to the attachment of the membrane 22 to the complete the assembly. The rim 18 as illustrated is defined at the top of the sidewall 28 of the container 12. The rim 18 is integrally formed with the sidewall 28 and includes an inside surface 30, a top surface 32 and a radially outward projecting flange 34. The flange 34 includes a rounded bead portion 36 and an undercut surface 38. The undercut surface 38 joins with the outside surface of the sidewall 28.

The present form of the rim 18 and container 12 are provided for illustration purposes. Other forms of containers and rims are known and may be used along with the closure provided herein. As a non-limiting example, the container may have a shape other than a round body and opening, as illustrated. The container shape may be oval, square, rectangular, oblong, etc. In addition, the shapes of the opening and container may differ. Further, the rim of the container may included various flat, pointed, undulating, or rounded (concave, convex or both) surfaces. Generally, the rim is intended to be defined by a substantially continuous surface that surrounds the container opening. Preferably, the rim is formed on a projection from the container body. The top surface of the rim is sometimes referred to as a chime and generally faces outwardly, transverse to the area of the container opening. The top surface may further be formed as a radial inwardly projected flange or surface.

In Fig. 4, the ring 20 is positioned concentric with the rim 18. The ring 20 includes a top surface 40 and a skirt portion extending transverse to the top surface 40 and generally parallel to the rim 18 and upper end of the sicle wall 28. The skirt portion includes an inward surface 42, a retaining ridge 44 and an outside periphery 46. The top surface 40 of the ring 20 is shown to be positioned in the same plane as the top or chime surface 32 of the container rim 18. The inside surface 42 of the skirt portion of the ring 20 faces radially inward and is shown to be in contact with the rounded bead 36 on the flange 34. The retaining ridge 44 is formed on a lower edge of the inside surface 42 and also faces inwardly, having a portion that aligns underneath the bead 36. In the initial step, the membrane 22 is positioned above the planer top surface 32 of the rim 18 and the top surface 40 of the concentric ring 20.

In Fig. 5, the membrane 22 is shown as being sealed to both the rim 18 of the container 12 and the ring 20. A sealing tool 62 is moved downwardly (arrow 60) towards the top surface 52 of the membrane 22. The sealing tool forms a rim seal 48 inward of a ring seal 50 due to the relative positioning of the rim 18 and ring 20. Preferably, the two seals 48, 50 are heat seals created by the application of pressure and heat by the sealing tool 62 against the membrane 22, with the pressure directed downwardly towards the top surface 32 of the rim 18 and the top surface 40 of the ring 20. The two seals 48, 50 are preferably formed simultaneously. The sealing tool 62 preferably includes a sealing surface that conforms to the contours of the two surfaces 32, 40. A separate support (not shown) may be provided to position the container and ring during the application of the sealing force/pressure. In addition, the membrane may be preformed to conform to the outline of the ring (with or without including the area of the lift tab extension). A tensioning force may also be applied to the membrane, transverse to the sealing force.

The strength of each of the two seals 48, 50 is preferably different so as to create a peelable or separable seal between the rim 18 and membrane 22 and a more permanent seal between the membrane 22 and ring 20. Generally, upon sealing the membrane 22 to the rim 18, the container 12 is hermetically sealed, protecting the product retained within the interior volume. In addition, the sealing of the membrane 22 to the ring 20 creates a closure 14 for the container 12.

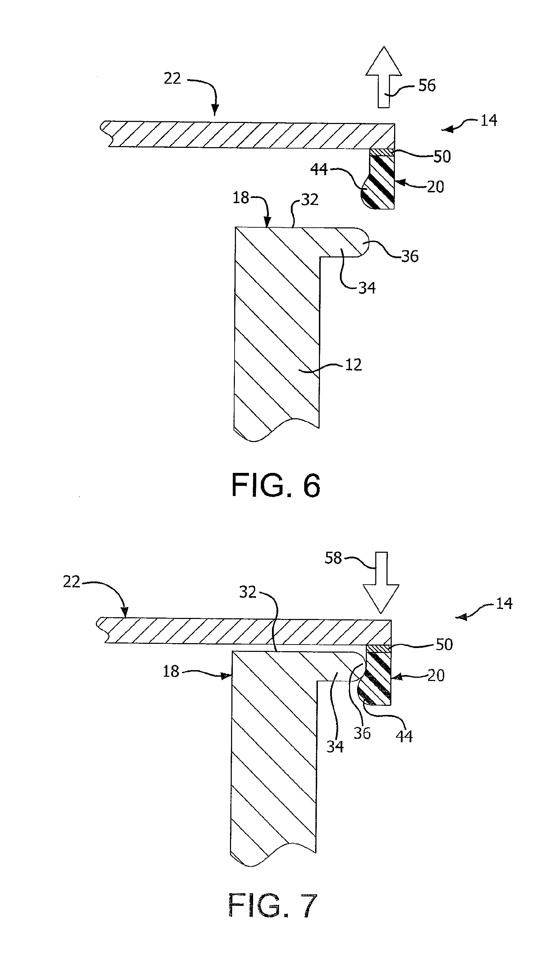

In Fig. 6, the closure 14, which is the combination of the ring 20 and membrane 22, is shown as separated from the rim 18 of the container 12. The separation may be cause by a lifting force 56 applied to the ring 20, such as an upward force of the tab 16 (as shown in Figs. 1-3). The lifting force 56 on the ring 20 separates the peelable seal (48) connecting the rim 18 to the membrane 22, with the seal 50 between the ring 20 and membrane remaining in place. The lifting force 56 also moves the retaining ridge 44 around the bead 36 of flange 34, resulting from the flexibility of the ring 20 and its associated material. The ridge 44 separation is similar to the removal of a typical overcap from a container.

In Fig. 7, the closure 14 is shown in a covering position with the container rim 18. The membrane 22 and ring 20 remain sealed to one another and create a composite structure. The closure 14 acts like a typical overcap and may be replaced on the rim 18 for closing the container 12. A closure force 58 is directed to the ring portion 20 and serves to overcome the resistance of the ridge 44 and bead 36, due to their dimensional relationship. The ring 20 material is able to flex to permit the ridge 44 to move around the bead 36 of the rim 18. Once the closure 14 is positioned on the rim 18, the membrane 22 is positioned adjacent the rim top surface 32, with the ring 20 concentrically positioned.

The seal 50 between the ring 20 and the membrane 22 remains in place in the creation of the closure 14. The seal 48 between the membrane 22 and rim 18 has previously been removed. Hence, the replacement of the closure 14 on the rim is no longer a hermetic seal, but provides a (temporary) freshness closure for the container contents. Further, the closure 14 may be removed (Fig. 6) and replaced (Fig. 7) as often as desired.

The assembly 10 and its method of formation may create a number of advantages. The creation of a composite closure, formed from a ring and membrane, creates a relatively light weight structure that has a reduced production cost, as compared to a molded overcap with a central body also part of the molded element. Further, the structure may be formed with a hermetic seal using the membrane that also forms the closure lid.

In forming a seal for the container, it is preferred that the sealing surfaces be aligned adjacent one another, with both facing upwardly from the top surfaces (such as for example the top surfaces shown in the accompanying drawings 32, 40) of the rim (18) and ring (20).

The present invention allows the similarly facing sealing surfaces to form the two seals simultaneously in a single step, and using a single sealing tool structure. One or more variations in the form of the tool or in the sealing process allow the formation of the two seals to have different sealing strengths e.g. to be at differing surface levels.

The variations include one or more differences in the group comprising; heating regime, pressure regime, timing, physical positions, adhesive or other materials used to create the seals; size of the seals, depths of the seals, etc. Other forms of attachment may also be applied, such as induction welding or ultrasonic welding of the membrane to the ring. Any one or any combination of these variations allows the user to calculate and achieve the seal of the membrane to the rim sealing surface having a first sealing strength and being separable upon removal of the ring from its position surrounding the rim of the container, with the seal of the membrane to the ring having a second sealing strength greater than the first sealing strength, and remaining in place upon removal of the ring and membrane from the container.

For example, small variations in the position of the two sealing surfaces may result in an advantageous difference in sealing force applied. Hence, a relatively greater heat and/or pressure on the ring seal may result in a stronger ring seal as compared to the seal formed with the container rim. Such variations are intended in the creation of the rim seal, which is peelable or otherwise breakable, while the ring seal is permanent so as to form the reusable closure lid.

In the figures, the rim seal 48 is shown as being wider than the ring seal 50. However, such is not a fixed requirement for the formation and use of the assembly. Other variations in the size of the seal, the amount of heat and pressure applied, and the materials involved in creating a seal are possible.

The materials used to form the rim of the container, the container body, the ring and the membrane may vary without departing from the advantages of the structure specifically described herein. As shown, the rim is integrally formed with the container body and is preferably formed by an injection molding process. The rim may be separately attached to the container and may have forms different from those shown. The rim and ring may also be integrally formed with a frangible connection provided between the two parts. A coating or other adhesive may be used to create or assist in creating the various seals between the rim, ring and membrane.

The membrane may have a variety of forms. For example, the membrane may be composed of a laminate material or a single layer of a flexible plastic. A foil material may also be utilized, with a desired coating applied on the inside surface for forming the heat seal with the rim and ring structures. Alternatively, the membrane may be formed of polyethylene or other flexible plastic. The container may be injection molded from a polypropylene material. The ring may also be molded using polypropylene or another moldable plastic. The container may be formed from a composite material, incorporating one or more layers of paper. The container may include a rolled rim or a separately attached rim structure, formed of metal, plastic or a composite structure. A coating may be applied to the exposed top surface of the rim and/or the ring to assist in the formation of the membrane seal.

In the drawings and specification, there has been set forth one or more embodiments of the invention and, although specific terms are employed, these terms are used in a generic and descriptive sense only and not for purposes of limitation. The scope of the invention is set forth in the following claims.

## Claims

1. A container and closure assembly (10), comprising:
a container (12) having a volume defined by one or more walls and an opening therein for access to the defined volume, the opening defined by a projecting rim (18) surrounding the opening, the rim having a rim sealing surface (32), and
a closure (14) for covering the container opening, the closure comprising
a support ring (20) dimensioned to surround the rim of the container, the ring having a ring sealing surface (40), the ring sealing surface positioned concentric with the rim sealing surface when the ring is positioned to surround the rim, and
a membrane having a surface area defined by the outer diameter of the support ring, the membrane being sealed to the rim sealing surface and sealed to the ring sealing surface,
wherein the seal (48) of the membrane to the rim sealing surface has a first sealing strength and is separable upon removal of the ring from its position surrounding the rim of the container, while the seal (50) of the membrane to the ring has a second sealing strength greater than the first sealing strength, and remains in place upon removal of the ring and membrane from the container.

2. The container and closure assembly (10) as in claim 1 wherein the concentrically positioned ring sealing surface (40) and rim sealing surface (32) are positioned substantially in the same plane.

3. The container and closure assembly (10) as in claims 1 or 2 wherein the different first sealing strength of the seal (48) of the membrane to the rim (18) and the second sealing strength of the seal (50) of the membrane to the ring (20) results from different heat, pressure or timing in a heat sealing process, different adhesives, different materials or a combination of any one of the above.

4. The container and closure assembly (10) as in claims 1 or 2 wherein the membrane (22) is heat sealed to the ring sealing surface (40) and the rim sealing surface (32).

5. The container and closure assembly (10) as in any of the preceding claims wherein the closure (14) further comprises a lifting tab projecting from the periphery of the ring (20).

6. The container and closure assembly (10) as in claim 1 wherein the container rim extends outwardly from the projecting rim and the opening defined thereby.

7. The container and closure assembly (10) as in any of the preceding claims wherein the ring (20) further comprises a skirt portion, the skirt portion extending substantially transverse to the ring sealing surface (40).

8. The container and closure assembly (10) as in claim 7 wherein the ring (20) further comprises a retaining ridge (44) formed on an inwardly facing surface of the skirt portion, the retaining ridge formed for engaging the container and retaining the ring and sealed membrane on the rim (18).

9. The container and closure assembly (10) as in any of the preceding claims wherein the container (12) or the ring (20) or both are formed from a thermoplastic material.

10. The container and closure assembly (10) as in any of the preceding claims wherein the ring (20) and container rim (18) are separately formed.

11. The container and closure assembly (10) as in any one of claims 1 through 11 wherein the ring (20) and container rim (18) are integrally molded and frangibly connected to one another.

12. A method of sealing a closure (14) to a container (12), the method comprising the steps of:
providing a container having a volume defined by one or more walls, an opening therein for access to the defined volume, a projecting rim (18) surrounding the opening, and a rim sealing surface (32),
providing a support ring (20) dimensioned to surround the rim of the container, the ring having a ring sealing surface (40),
positioning the ring sealing surface to surround the rim sealing surface, wherein the ring sealing surface is adjacent the rim sealing surface when the ring surrounds the rim,
providing a membrane (22) having a surface area corresponding to the inward area defined by the support ring,
positioning the membrane in contact with the rim sealing surface and the ring sealing surface, and
sealing the membrane to the rim sealing surface and the ring sealing surface to thereby form the closure and seal the closure to the container, wherein the seal (48) of the membrane to the rim sealing surface has a first sealing strength and is separable upon removal of the ring from its position surrounding the rim of the container, and the seal (50) of the membrane to the ring has a second sealing strength greater than the first sealing strength, and remains in place upon removal of the ring and membrane from the container

13. The method as in claim 12 further comprising the step of positioning the concentrically ring sealing surface (40) and rim sealing surface (32) in substantially in the same plane.

14. The method as in claims 12 or 13 wherein the sealing of the membrane to the ring sealing surface (40) and to the rim sealing surface (32) results from a heat sealing operation.

15. The method as in claim 14 wherein variation in the first sealing strength of the seal of the membrane to the rim and the second sealing strength of the seal of the membrane to the ring results from variation in the heat, pressure or timing in a heat sealing process, variation in adhesives, variation in materials or a combination of any one of the above.
